# FASCICULE DE BREVET EUROPEEN

(11) **EP 2 294 850 B1**
(45) Date de publication et mention de la délivrance du brevet: **30.11.2011**
(21) Numéro de dépôt: 09784397.3
(22) Date de dépôt: 05.06.2009
(51) Int. Cl.: H04W 12/04, H04W 12/06, H04W 84/18

(54) **PROCEDE POUR SECURISER DES ECHANGES ENTRE UN NOEUD DEMANDEUR ET UN NOEUD DESTINATAIRE**
VERFAHREN ZUR SICHERUNG VON AUSTAUSCHPROZESSEN ZWISCHEN EINEM SENDEKNOTEN UND EMPFANGSKNOTEN
METHOD OF SECURING EXCHANGES BETWEEN AN APPLICANT NODE AND A DESTINATION NODE

(30) Priorité: 24.06.2008 FR 0854161
(43) Date de publication de la demande: 16.03.2011
(73) Titulaire: France Telecom, 75015 Paris (FR)
(72) Inventeur: MOUSTAFA, Hassnaa, F-92100 Boulogne Billancourt (FR); BOURDON, Gilles, F-91160 Longjumeau (FR)
(74) Mandataire: Lecomte, Isabelle
(86) Numéro de dépôt international: PCT/FR2009/051066
(87) Numéro de publication internationale: WO 2010/007267

(56) Documents cités:
- EP-A- 1 906 619
- MOUSTAFA ET AL: "Providing Authentication and Access Control in Vehicular Network Environment" PROCEEDINGS OF THE IFIP TC-11 21ST INTERNATIONAL INFORMATION SECURITY CONFERENCE, SEC 2006, MAY 206, KARLSTAD, SWEDEN, vol. 201, 25 juillet 2006 (2006-07-25), pages 62-73, XP002514568 Springer Boston ISBN: 978-0-387-33405-9

## Description

L'invention concerne une technique d'authentification dans un réseau de communication.

On se place dans le cadre d'un réseau de communication de type ad-hoc. Un réseau ad-hoc est un réseau constitué d'un ensemble de noeuds ayant la possibilité de communiquer entre eux sans déploiement d'une infrastructure fixe. Néanmoins, il est possible que le réseau ad-hoc se rattache à une infrastructure, par exemple pour l'accès à un réseau de communication de type Internet. Les noeuds qui constituent un tel réseau peuvent être mobiles ou fixes. Ces noeuds interagissent et coopèrent entre eux, se basant sur une communication éventuellement multi-sauts. Ainsi, les échanges entre un noeud demandeur et un noeud destinataire peuvent le cas échéant transiter par au moins un noeud intermédiaire.

Le document intitulé "Kerberos Assisted Authentication in Mobile Ad-hoc Networks" de A. Pirzada et C. McDonald, publié dans les actes de la conférence "27th Australasian Computer Science Conférence" 2004, décrit un mécanisme d'authentification de type Kerberos dans un réseau ad-hoc. Un noeud demandeur N1 contacte un serveur en vue d'un accès auprès d'un autre noeud N2. Suite à une authentification réussie, le serveur transmet des données, appelées ticket ou preuve d'authentification, protégées au moyen d'une clé secrète KN2 de l'autre noeud N2, et une clé de session KN1N2 protégée au moyen d'une clé secrète KN1 du noeud demandeur N1. Le ticket comprend la clé de session KN1N2. Le noeud demandeur N1 obtient ainsi la clé de session KN1N2 par déchiffrement à l'aide de la clé KN1. Puis, il transmet une requête d'accès à l'autre noeud N2, la requête comprenant le ticket et une donnée signée avec la clé de session KN1N2. L'autre noeud N2 déchiffre le ticket à l'aide de sa clé KN2 et obtient la clé de session KN1N2. A l'aide de cette dernière, il déchiffre la donnée signée et authentifie ainsi le noeud demandeur N1. Ce mécanisme garantit une détection d'usurpation d'identité du noeud demandeur, une détection d'attaques par rejeu, un établissement de canaux sécurisés et une authentification du noeud demandeur auprès de l'autre noeud. Seul le noeud demandeur est authentifié auprès de l'autre noeud par la fourniture de la preuve d'authentification et de la donnée signée au moyen de la clé de session KN1N2. Si l'autre noeud n'utilise pas ultérieurement la clé de session KN1N2, obtenue par déchiffrement au moyen de sa propre clé secrète KN2 de la preuve d'authentification, le noeud demandeur n'a aucune garantie que l'autre noeud est un noeud de confiance. De plus, dans le cas d'une communication multi-sauts transitant par au moins un noeud intermédiaire, le noeud intermédiaire n'est pas obligatoirement un noeud de confiance.

Le document "Providing Authentication and Access Control in Vehicular Network Environment" de Hasnaa Moustafa et al. publié dans les actes de la conférence "IFIP TC-11 21ST INTERNATIONAL INFORMATION SECURITY CONFERENCE, SEC 2006", pages 62-73, décrit un autre mécanisme d'authentification pour l'établissement des communications sécurisées entre véhicules.

Un des buts de l'invention est de remédier aux inconvénients de l'état de la technique.

L'invention propose à cet effet un procédé pour sécuriser des échanges entre un noeud demandeur et un noeud destinataire, lesdits noeuds appartenant à un réseau de communication,
ledit procédé comprenant les étapes suivantes mises en oeuvre par un serveur de sécurisation :
- une étape de réception d'une requête envoyée par le noeud demandeur en vue d'un accès au noeud destinataire ;
- une étape d'envoi d'une réponse à la requête, ladite réponse comprenant une preuve d'authentification destinée au noeud destinataire et une clé de session, destinée à être utilisée pour les échanges entre les noeuds demandeur et destinataire,
caractérisé en ce que, au moins un secret, à partager avec au moins un autre noeud demandeur, distinct de la clé de session, étant associé au noeud destinataire, la réponse envoyée au noeud demandeur contient en outre ledit secret..

On notera que l'invention tire son origine de malveillance potentielle dans un réseau de communication de type ad-hoc. Toutefois, l'invention peut s'appliquer à tout réseau de communication dans lequel il est nécessaire de suivre un chemin sécurisé.

Dans la réponse à la requête, le serveur transmet non seulement des informations liées à l'échange entre le noeud demandeur et le noeud destinataire, telles qu'une preuve d'authentification à fournir au noeud destinataire et une clé de session pour les échanges entre le noeud demandeur et le noeud destinataire, mais également un secret à partager avec au moins un noeud demandeur et associé au noeud destinataire. Ainsi, en fonction du noeud destinataire, on constitue un groupe de noeuds comprenant au moins le noeud demandeur et le noeud destinataire. Ce groupe de noeuds partage un secret, permettant d'améliorer la sécurisation des échanges dans le groupe. Une seule requête est ainsi effectuée, permettant ainsi d'obtenir à la fois une autorisation d'accès à un service fourni par le noeud destinataire et le secret partagé dans le groupe. Le serveur, jouant le rôle d'un tiers de confiance, permet la mise en oeuvre d'une authentification indirecte du noeud demandeur pour le compte du noeud destinataire et fournit au noeud demandeur le secret partagé lui permettant de se mettre en relation avec le noeud destinataire par une liaison sécurisée. L'unicité de la requête, respectivement de sa réponse, permet d'obtenir une mise en oeuvre simple et particulièrement efficace. Il est ainsi possible de distribuer simplement le secret partagé lors des échanges en vue de l'accès au noeud destinataire sans requérir une nouvelle authentification auprès d'un autre tiers de confiance. Le fait qu'un noeud du groupe détienne le secret partagé et soit capable de le prouver permet d'en déduire qu'il est implicitement authentifié auprès du serveur. L'utilisation d'un secret partagé permet de plus de mettre en oeuvre des techniques d'authentification simples et rapides, basées sur de la cryptographie symétrique, adaptées pour une mise en oeuvre sur des noeuds susceptibles d'avoir des ressources, telles que sa batterie, ses capacités mémoires, limitées.

Pour une application d'un réseau ad-hoc, le noeud destinataire fournit par exemple un service dans une zone géographique déterminée. Les noeuds, ayant obtenu le secret partagé et ainsi implicitement authentifiés auprès du serveur, forment ainsi un groupe de confiance sécurisant les échanges à destination du noeud destinataire dans une liaison éventuellement multi-sauts. Le noeud destinataire peut quant à lui obtenir le secret par une relation privilégiée avec le serveur.

Ainsi, il est possible d'améliorer la sécurisation des échanges entre un noeud demandeur et un noeud destinataire dans un réseau de communication de type ad-hoc.

Dans un mode de réalisation, la réponse contient en outre un intervalle de temps de validité associé audit secret.

Ainsi, il est possible de distribuer une pluralité de secrets partagés auxquels sont associés des intervalles de validité respectifs. Le noeud demandeur détermine ensuite en fonction d'une horloge courante le secret à utiliser. Ceci permet de limiter les demandes vers le serveur afin d'obtenir des secrets valides et d'éviter une simultanéité des demandes lorsque les secrets ne sont plus valides. Le secret partagé étant renouvelé fréquemment, ceci permet d'éviter des cas de vol du secret partagé.

L'invention concerne en outre un procédé pour communiquer entre un noeud demandeur et un noeud destinataire, lesdits noeuds appartenant à un réseau de communication, ledit procédé comprenant les étapes suivantes mises en oeuvre par le noeud demandeur :
- une étape d'envoi d'une requête à un serveur de sécurisation en vue d'un accès au noeud destinataire ;
- une étape de réception d'une réponse à la requête comprenant une preuve d'authentification destinée au noeud destinataire et une clé de session, destinée à être utilisée pour les échanges entre les noeuds demandeur et destinataire,
caractérisé en ce que la réponse comprend en outre au moins un secret et en ce que ledit procédé comprend en outre une étape d'authentification d'au moins un autre noeud au moyen dudit au moins un secret, ledit autre noeud étant apte à joindre le noeud destinataire.

Le noeud demandeur obtient ainsi un secret, associé à un noeud destinataire, partagé dans un groupe de noeuds, dit groupe de confiance. Il peut ainsi authentifier les noeuds avec lesquels il est en relation directe, c'est-à-dire ses voisins immédiats, à l'aide de ce secret partagé et privilégier des noeuds voisins authentifiés lors des échanges avec le noeud destinataire. Il obtient ainsi une garantie qu'un noeud malveillant ne répond pas en lieu et place du noeud destinataire et également qu'aucun noeud malveillant ne s'est inséré dans la chaîne de noeuds reliant le noeud demandeur et le noeud destinataire.

Dans un mode de réalisation, la réponse comprenant en outre un intervalle de temps de validité associé audit secret, le noeud demandeur sélectionne un secret valide en fonction d'un instant courant.

Ainsi, les noeuds du groupe partagent un secret en commun indépendamment de l'instant auquel ils ont transmis une requête au serveur.

Dans un autre mode de réalisation, l'étape d'envoi d'une demande d'accès à un noeud destinataire est effectuée suite à une détection d'absence de secret valide.

Chaque fois que le noeud demandeur n'a plus de secrets en cours de validité, il contacte de nouveau le serveur, afin de pouvoir maintenir la constitution du groupe de confiance.

En outre, le noeud demandeur et le noeud destinataire communiquent ensuite par un chemin constitué de noeuds authentifiés au moyen du secret.

L'invention concerne également un serveur pour sécuriser des échanges entre un noeud demandeur et un noeud destinataire dans un réseau de communication, comprenant :
- des moyens de réception d'une requête envoyée par un noeud demandeur en vue d'un accès à un noeud destinataire ;
- des moyens d'envoi d'une réponse à la requête, ladite réponse comprenant une preuve d'authentification destinée au noeud destinataire et une clé de session, destinée à être utilisée pour les échanges entre les noeuds demandeur et destinataire,
caractérisé en ce que les moyens d'envoi sont en outre agencés pour inclure dans la réponse un secret, ledit secret, à partager avec au moins un autre noeud demandeur, distinct de la clé de session, étant associé au noeud destinataire

L'invention concerne de plus un noeud d'un réseau de communication, comprenant :
- des moyens d'envoi d'une requête à un serveur en vue d'un accès à un noeud destinataire ;
- des moyens de réception d'une réponse à la requête, la réponse comprenant une preuve d'authentification destinée au noeud destinataire et une clé de session, destinée à être utilisée pour les échanges entre le noeud et le noeud destinataire,
caractérisé en ce que les moyens de réception sont en outre agencés pour recevoir une réponse comprenant au moins un secret et en ce que ledit noeud comprend en outre des moyens d'authentification d'au moins un autre noeud au moyen dudit au moins un secret, ledit autre noeud étant apte à joindre le noeud destinataire.

L'invention concerne également un système de communication dans un réseau de communication, comprenant un serveur tel que décrit précédemment et une pluralité de noeuds tels que décrits précédemment.

L'invention concerne en outre un programme d'ordinateur comportant des instructions pour la mise en oeuvre du procédé pour sécuriser des échanges tel que décrit précédemment par un serveur d'un réseau de communication, lorsque ce programme est exécuté par un processeur.

L'invention concerne également un programme d'ordinateur comportant des instructions pour la mise en oeuvre du procédé pour communiquer avec un noeud destinataire tel que décrit précédemment par un noeud demandeur d'un réseau de communication, lorsque ce programme est exécuté par un processeur.

L'invention concerne en outre un signal supportant une réponse à une demande d'accès à un noeud destinataire émise par un noeud demandeur, ladite réponse étant émise par un serveur au noeud demandeur et comprenant une preuve d'authentification destinée au noeud destinataire et une clé de session, destinée à être utilisée pour des échanges entre les noeuds demandeur et destinataire, caractérisé en ce que ladite réponse comprend en outre au moins un secret ledit secret, à partager avec au moins un autre noeud demandeur, distinct de la clé de session, étant associé au noeud destinataire.

L'invention sera mieux comprise à l'aide de la description suivante d'un mode de réalisation particulier des procédés de l'invention, en référence aux dessins annexés sur lesquels :
- la figure 1 représente un réseau de communication ;
- la figure 2 représente une partie des étapes des procédés selon un mode particulier de réalisation de l'invention ;
- la figure 3 représente une autre partie du procédé pour communiquer selon le mode particulier de réalisation de l'invention ;
- la figure 4 représente une requête en vue d'un accès selon le mode particulier de réalisation de l'invention ;
- la figure 5 représente une réponse à la requête en vue d'un accès selon le mode particulier de réalisation de l'invention ;
- la figure 6 représente de manière plus détaillée un champ de la réponse selon le mode particulier de réalisation de l'invention ;
- la figure 7 représente un dispositif pour sécuriser des échanges selon le mode particulier de réalisation de l'invention ;
- la figure 8 représente un noeud du réseau de communication selon le mode particulier de réalisation de l'invention.

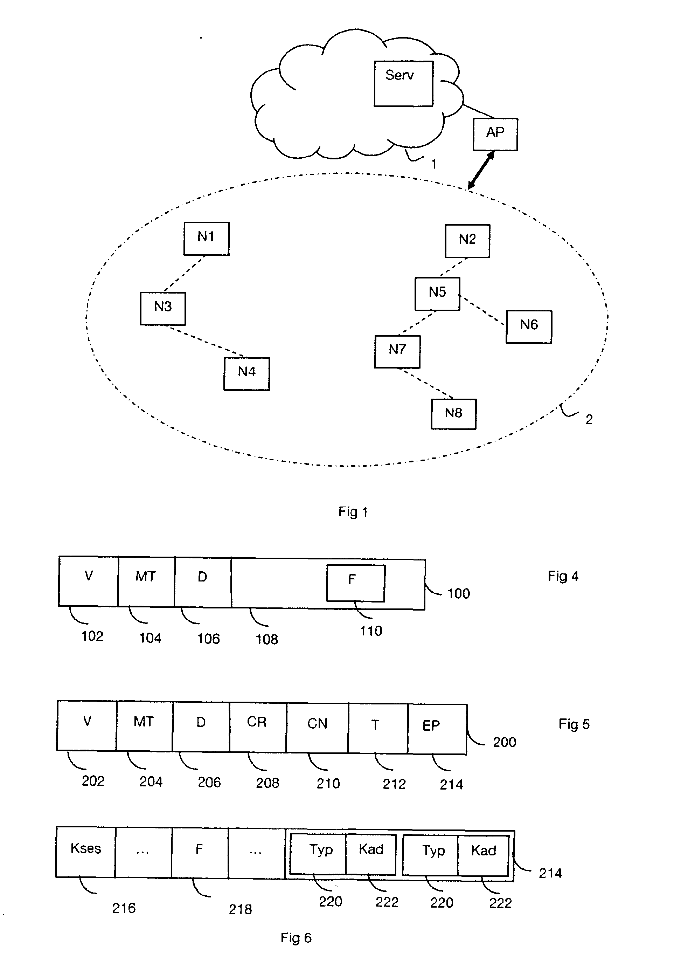

Sur la figure 1, est représenté un réseau ad-hoc 2. Il comprend une pluralité de noeuds, notés N1 à N8. Ces noeuds sont aptes à communiquer entre eux par l'intermédiaire de liaisons sans-fil. Une communication entre deux noeuds du réseau ad-hoc 2 peut transiter par l'intermédiaire d'autres noeuds ; il s'agit dans ce cas de communication multi-sauts. A titre d'exemple, une communication entre les noeuds N1 et N4 transite par l'intermédiaire du noeud N3 et est matérialisée sur la figure 1 par un trait en pointillé. De même, la communication entre les noeuds N2 et N8 transite par l'intermédiaire des noeuds N5 et N7 et la communication entre les noeuds N2 et N6 transite par le noeud N5. Ces noeuds peuvent être mobiles ou bien fixes.

Chaque noeud N1-N8 du réseau ad-hoc 2 possède une clé secrète propre KN1-KN8.

Par la suite, les noeuds N1 et N2 jouent un rôle particulier de noeud fournisseur d'application. Il s'agit d'un noeud du réseau ad-hoc 2, qui reste par exemple fixe, avec lequel les autres noeuds du réseau ad-hoc peuvent communiquer afin d'avoir accès à un service donné ou une application donnée. A titre d'exemples non limitatifs, il s'agit de téléchargement de contenus audiovisuels, d'application de contenu vidéo ou "video streaming", d'impression, ...

Un serveur de sécurisation Serv appartient à un réseau coeur 1 d'un opérateur de communication. Ce serveur de sécurisation Serv est agencé pour authentifier des noeuds du réseau ad-hoc et leur fournir une preuve de leur authentification afin qu'ils puissent accéder aux applications proposées par les noeuds fournisseurs d'application N1 et N2. Le serveur de sécurisation Serv est agencé pour mémoriser les identifiants des noeuds autorisés à accéder au réseau ad-hoc. A chaque identifiant de noeud est associé la clé secrète de celui-ci. Par la suite, le serveur de sécurisation Serv met en oeuvre le protocole Kerberos, tel que spécifié dans le document de l'Internet Engineering Task Force RFC 4120 intitulé "The Kerberos Network authentication Service". Il joue le rôle d'un tiers de confiance. Il comprend deux entités : une première entité jouant le rôle d'une entité d'authentification, notée AS pour "Authentication Server", et une deuxième entité jouant le rôle d'un service d'émission de tickets, notée TGS pour "Ticket Grant Service".

Un point d'accès AP permet aux noeuds du réseau ad-hoc 2 d'accéder au réseau coeur 1 et ainsi de communiquer avec le serveur de sécurisation Serv. Par la suite, le point d'accès AP est agencé pour jouer le rôle d'un Proxy Kerberos, tel que spécifié dans le document de l'IETF "draft-ietf-krb-wg-iakerb-00".

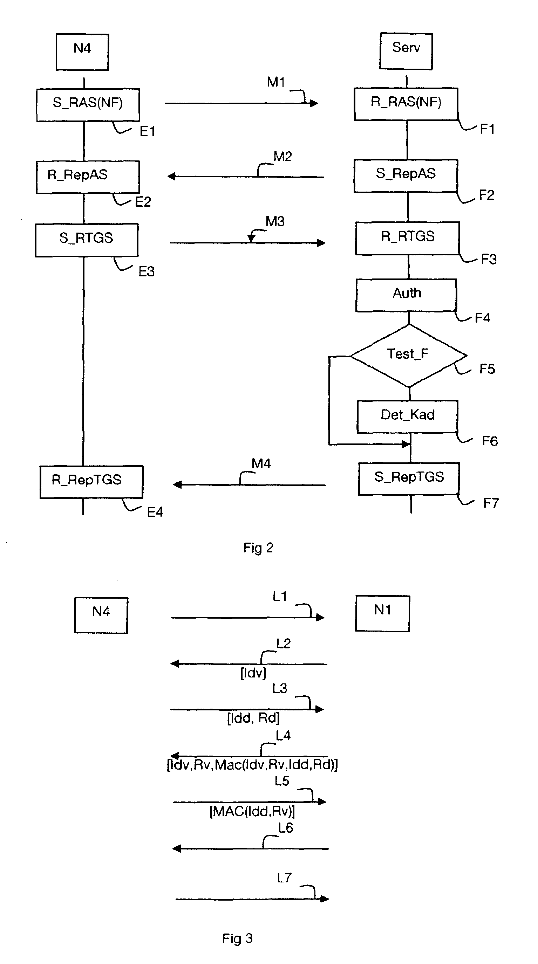

Le procédé pour sécuriser des échanges, tel que mis en ouvre par le serveur de sécurisation, va maintenant être décrit en relation avec la figure 2.

Le procédé pour communiquer, tel que mis en oeuvre par un noeud demandeur, va quant à lui être décrit en relation avec les figures 2 et 3.

Dans l'exemple décrit, l'utilisateur du noeud demandeur N4 veut communiquer avec le noeud fournisseur d'application N1.

Le noeud demandeur N4 détecte dans une première étape E1, notée "S_RAS(NF)" sur la figure 2, qu'il ne possède pas un secret en cours de validité pour communiquer dans le réseau ad-hoc 2 ou qu'il ne possède pas de preuve d'authentification en cours de validité pour le noeud fournisseur d'application N1. Le secret est associé au noeud fournisseur d'application N1 et destiné à être partagé par le groupe de noeuds du réseau ad-hoc communiquant avec ce dernier. La preuve d'authentification est destinée à être fournie au noeud fournisseur d'application N1 et apporte à celui-ci une preuve que le noeud demandeur N4 a été authentifié auprès du serveur de sécurisation Serv.

Toujours dans cette étape E1, le noeud demandeur N4 transmet une requête M1 au serveur de sécurisation Serv en vue d'un accès au noeud fournisseur d'application N1. Il s'agit dans le protocole Kerberos d'un message AS-REQ.

Les échanges s'effectuent par l'intermédiaire du point d'accès AP qui met en oeuvre un mécanisme de délégation (ou fonction de "Proxy Kerberos" en anglais). Toutefois, afin de simplifier la description et la figure 2, les différents échanges n'ont pas été décomposés.

Cette requête M1 est reçue par le serveur de sécurisation Serv, plus précisément par l'entité AS, dans une étape F1 de réception, notée "R_RAS(NF)" sur la figure 2.

Après vérification de l'identifiant du noeud demandeur N4, l'entité AS du serveur de sécurisation Serv transmet dans une étape F2, notée "S_RepAS" sur la figure 2, un message M2 de réponse à la requête en vue d'un accès au noeud fournisseur d'application N1 comprenant, conformément au protocole Kerberos :
- un premier ticket T_{TGS.} et,
- une première clé de session Ksession chiffrée au moyen de la propre clé secrète KN4 du noeud demandeur N4.

Dans le protocole Kerberos, il s'agit d'un message AS-REP.

Ce premier ticket T_{TGS} est chiffré par l'entité AS du serveur de sécurisation Serv au moyen d'une clé Ktgs. Il contient notamment des informations sur le noeud demandeur N4 mais également la première clé de session Ksession destinée à être utilisée par ce dernier pour obtenir une preuve d'authentification.

Le message M2 de réponse à la requête en vue d'un accès au noeud fournisseur d'application N1 est reçu par le noeud demandeur N4 dans une étape E2, notée "R_RepAS" sur la figure 2.

À l'issue de ces échanges de messages M1 et M2, le noeud demandeur N4 possède le premier ticket T_{TGS}, qu'il ne peut pas déchiffrer, et la première clé de session Ksession. Si le noeud demandeur N4 n'est pas celui qu'il dit être, il ne lui est pas possible de déchiffrer la première clé de session Ksession, car seul le véritable noeud demandeur N4 possède la clé secrète KN4 permettant de déchiffrer la première clé de session Ksession.

Dans une étape E3, notée "S_RTGS" sur la figure 2, le noeud demandeur N4 transmet à l'entité TGS du serveur de sécurisation une requête M3 de preuve d'authentification. Dans le protocole Kerberos, il s'agit d'un message TGS-REQ. Cette requête M3 comprend le premier ticket T_{TGS} transmis par l'entité AS du serveur Serv dans le message M2 de réponse à la requête en vue d'un accès au noeud fournisseur d'application N1 ainsi que des informations protégées à l'aide de la première clé de session Ksession.

La requête M3 de preuve d'authentification est représentée sur la figure 4.

Une telle requête 100 comprend, conformément à la RFC 4120 :
- un champ 102, indiquant la version de protocole Kerberos ;
- un champ 104 indiquant le type de message ;
- un champ 106 comprenant une donnée pour pré-authentifier ;
- un champ 108 comprenant le corps du message.

Le champ 108 comprend, entre autres, un identifiant du noeud demandeur N4 et des drapeaux 110 permettant de signaler le support ou non d'options du protocole. Dans le mode particulier de réalisation de l'invention, un drapeau permet au noeud demandeur N4 de signaler que sa requête vise également à obtenir un secret associé au noeud fournisseur d'application N1. Ceci permet de garantir une compatibilité avec un serveur mettant en oeuvre le protocole Kerberos classique et également de distinguer des noeuds supportant cette option de noeuds qui ne la supportent pas.

Cette requête M3 de preuve d'authentification est reçue par l'entité TGS du serveur de sécurisation Serv dans une étape F3, notée "R_RTGS" sur la figure 2.

Dans une étape F4, notée "Auth" sur la figure 2, l'entité TGS du serveur de sécurisation déchiffre le premier ticket T_{TGS} avec sa propre clé secrète Ktgs. Elle obtient alors la première clé de session Ksession et peut ainsi déchiffrer les informations transmises par le noeud demandeur N4. Ceci lui permet d'authentifier implicitement le noeud demandeur N4 puisque ce dernier lui apporte la preuve qu'il possède bien la clé KN4. L'entité TGS détermine ensuite une seconde clé de session KN1N4, destinée à être utilisée, le cas échéant, pour les échanges ultérieurs entre le noeud fournisseur d'application N1 et le noeud demandeur N4. L'entité TGS détermine également une preuve d'authentification, permettant un accès au noeud fournisseur d'application N1. Cette preuve d'authentification comprend la seconde clé de session KN1N4 et est protégée au moyen de la clé secrète KN1 du noeud fournisseur d'application N1.

Dans une étape de test F5, notée "Test_F" sur la figure 2, l'entité TGS vérifie si la requête M3 comprend dans le champ 110 un drapeau signalant que la requête vise également à obtenir un secret partagé.

Si un tel drapeau est présent, dans une étape F6, notée "Det_Kad" sur la figure 2, l'entité TGS détermine un secret Kad, associé au noeud fournisseur d'application N1 auquel le noeud demandeur N4 souhaite accéder, et destiné à être partagé par un groupe de noeuds du réseau ad-hoc 2.

Dans une étape F7, notée "S_RepTGS" sur la figure 2, l'entité TGS transmet au noeud demandeur N4 une réponse M4 à la requête comprenant :
- la preuve d'authentification à fournir au noeud fournisseur d'application N1, déterminée à l'étape F4, protégée au moyen de la clé secrète KN1 du noeud fournisseur d'application N 1 ;
- la seconde clé de session, KN1N4, destinée à être utilisée pour les échanges entre le noeud demandeur N4 et le noeud fournisseur d'application N1 et déterminée à l'étape F4, protégée au moyen de la première clé de session Ksession ;
- si le drapeau signalant que la requête vise également à obtenir un secret était présent dans la requête M3, le secret partagé Kad déterminé à l'étape F6, protégé au moyen de la première clé de session Ksession.

Une telle réponse M4 à la requête de preuve d'authentification est représentée sur la figure 5. Dans le protocole Kerberos, il s'agit d'un message TGS-REP.

Une telle réponse 200 comprend, conformément à la RFC 4120 :
- un champ 202, indiquant la version de protocole Kerberos ;
- un champ 204 indiquant le type de message ;
- un champ 206 comprenant une donnée pour pré-authentifier ;
- un champ 208 comprenant un domaine du noeud demandeur ;
- un champ 210 comprenant un nom du noeud demandeur ;
- un champ 212 comprenant la preuve d'authentification à fournir au noeud fournisseur d'application N1 ;
- un champ 214 comprenant des données protégées par chiffrement au moyen de la première clé de session Ksession connue à la fois par l'entité TGS et le noeud demandeur N4.

Les données chiffrées comprises dans le champ 214 sont représentées à la figure 6. Elles comprennent notamment :
- la seconde clé de session 216 KN1N4 ;
- un champ 218 comprenant des drapeaux permettant de signaler le support ou non d'options du protocole ; dans le mode particulier de réalisation de l'invention, un drapeau permet au serveur de sécurisation Serv de signaler qu'un secret est compris dans la suite des données 214 ;
- un champ 222 comprenant le secret Kad en fonction de la valeur du drapeau relatif au secret partagé, cité ci-dessus.

Dans une variante de réalisation, à un secret Kad est associé un intervalle de temps de validité de secret, transmis dans un champ 220.

La réponse M4 est reçue par le noeud demandeur N4 dans une étape E4, notée "R_RepTGS" sur la figure 2.

A l'issue des échanges des messages M3 et M4, le noeud demandeur N4 possède une preuve d'authentification à fournir au noeud fournisseur d'application N1, qu'il ne peut pas déchiffrer, la deuxième clé de session KN1N4 et le secret partagé Kad dans le groupe de noeuds du réseau ad-hoc 2.

Il est à noter également que dans le cas d'une communication multi-sauts, lorsque le noeud demandeur N4 transmet la preuve d'authentification au noeud fournisseur d'application N1, aucun des noeuds intermédiaires, contribuant à l'acheminement de la preuve d'authentification, ne peut déchiffrer celle-ci et ne peut donc obtenir la seconde clé de session KN1N4. En effet, la preuve d'authentification est protégée par chiffrement au moyen de la clé secrète KN1 du noeud fournisseur d'application N1 et ne peut être déchiffrée par un noeud quelconque.

Le noeud demandeur N4 possédant le secret partagé Kad, il lui est alors possible de mettre en oeuvre une étape d'authentification pour chacun des noeuds avec lesquels il est en relation directe, c'est-à-dire les noeuds voisins. On entend par noeud voisin, un noeud localisé dans une zone de couverture radio du noeud demandeur N4. Le noeud demandeur N4 présente le secret partagé Kad à un noeud voisin comme preuve d'authenticité et le noeud voisin prouve également son authenticité en présentant la même clé. Il s'agit par exemple d'une authentification mutuelle EAP-PSK à l'aide du secret partagé Kad. Ce type d'authentification présente l'avantage de requérir des ressources de traitement limitées.

Ce mécanisme d'authentification est décrit dans le document RFC 4764 de l'IETF. Il est décrit succinctement en relation avec la figure 3.

Le noeud demandeur N4 transmet un message L1 de requête d'identité du noeud voisin N3, par exemple "EAP-Request Identity". Le noeud voisin N3 transmet son identité Idv au noeud demandeur N4 dans un message L2, par exemple "EAP-Response Identity". Dans un message L3, par exemple "EAP-Request/PSK", le noeud demandeur N4 transmet sa propre identité Idd ainsi qu'une variable aléatoire Rd qu'il a générée au noeud voisin N3. Le noeud voisin N3 détermine une variable aléatoire Rv, calcule un premier code d'authentification MAC sur l'ensemble des données (Idv, Rv, Idd, Rd) signé par le secret partagé Kad et transmet au noeud demandeur N4 son identifiant Idv, la variable aléatoire Rv et le premier code d'authentification MAC dans un message L4, par exemple "EAP-response/PSK". Le noeud demandeur N4 vérifie le premier code d'authentification MAC à l'aide du secret partagé Kad pour authentifier le noeud voisin N3. Puis, le noeud demandeur N4 transmet dans un message L5, par exemple "EAP-Request/PSK", au noeud voisin N3 la variable aléatoire Rd ainsi qu'un deuxième code d'authentification MAC calculé sur l'ensemble constitué de son identité Idd et de la variable aléatoire Rv, signé avec le secret partagé Kad. Le noeud voisin N3 vérifie le deuxième code d'authentification MAC à l'aide du secret partagé Kad et transmet au noeud demandeur N4 un message L6, par exemple "EAP-Response/PSK", qui comprend la variable aléatoire Rd. Un message L7, par exemple "EAP-Success" en cas de succès, transmis du noeud demandeur N4 au noeud voisin N3, termine l'étape d'authentification.

Il est alors possible de privilégier, pour l'acheminement des messages entre le noeud demandeur N4 et le noeud fournisseur d'application N1, des noeuds du réseau ad-hoc 2 appartenant au groupe partageant le secret Kad. Il est en effet possible de construire des routes utilisées par un protocole de routage en utilisant une métrique de sécurité. Un tel mécanisme est décrit par exemple dans l'article intitulé "Secure Routing for Mobile Ad-hoc Networks" de P. Argyroudis et D. O'Mahony, publié dans la revue IEEE Communications Survey, 3rd quarter 2005. Cet article décrit un mécanisme SAR pour "Secure Ad-hoc Routing", applicable aux protocoles de routage réactif tels que le protocole AODV, pour "Ad-hoc On-Demand Distance Vector", ou le protocole DSR, pour "Dynamic Source Routing", qui intègre une métrique de sécurité dans les messages de Route Request, afin de construire des routes entre les noeuds ayant un niveau de sécurité défini.

Le noeud demandeur N4 transmet donc sa requête d'accès au noeud fournisseur d'application en présentant sa preuve d'authentification, qui, pour mémoire, est protégée au moyen de la clé secrète KN1 du noeud fournisseur d'application N1. La requête d'accès est alors transférée par le protocole de routage au niveau de la couche 3 OSI. Un noeud intermédiaire N3 recevant la requête d'accès ne peut déchiffrer la preuve d'authentification et relaie cette requête en choisissant à son tour un noeud voisin en fonction de l'état d'authenticité de ses voisins. Ceci est répété jusqu'au noeud fournisseur d'application N1, qui, en déchiffrant la preuve d'authentification au moyen de sa propre clé secrète KN1, obtient la seconde clé de session KN1N4. La preuve d'authentification prouve que le noeud demandeur N4 est bien authentifié auprès du serveur de sécurisation Serv. La preuve d'authentification est ainsi envoyée au noeud fournisseur d'application N1 par un chemin constitué de noeuds authentifiés au moyen du secret partagé. Le noeud fournisseur d'application N1 peut alors fournir le service demandé en protégeant le trafic à l'aide de la seconde clé de session KN1N4. Les échanges ultérieurs entre le noeud demandeur N4 et le noeud fournisseur d'application N1 empruntent également ce chemin ou tout autre chemin constitué de noeuds authentifiés au moyen du secret partagé.

Dans un autre mode de réalisation de l'invention, suite à la réception d'une requête envoyée par le noeud demandeur N4 à l'étape F1, l'entité TGS détermine lors de l'étape F6 une pluralité de secrets partagés et associe à chaque secret partagé un intervalle de temps de validité du secret. Chaque secret partagé Kad a ainsi une durée de vie limitée D. Le serveur transmet à l'étape F7 dans la réponse un ensemble de secrets partagés valides pour les périodes suivantes.

La réponse est reçue à l'étape E4 par le noeud demandeur N4.

Ensuite, lorsqu'il doit authentifier un de ses voisins, le noeud demandeur N4 sélectionne un secret partagé valide en fonction d'un instant courant.

Ainsi, le serveur de sécurisation Serv distribuant une pluralité de clés lors d'une requête en vue d'un accès au noeud destinataire, les noeuds sollicitent moins fréquemment le serveur et de plus, ces sollicitations sont effectuées de façon désynchronisée.

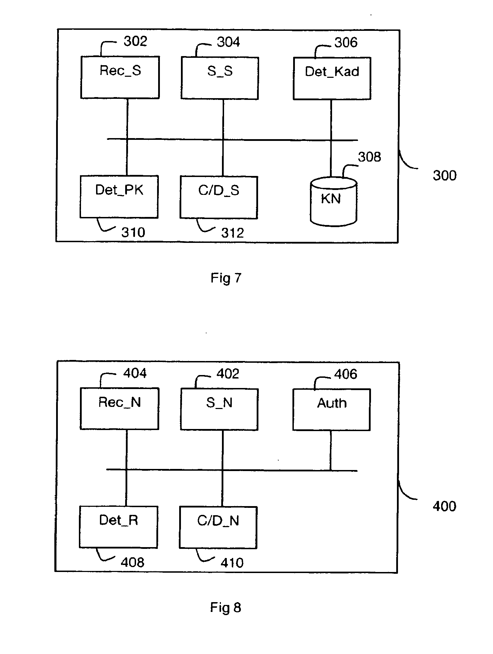

On va maintenant décrire un serveur pour sécuriser des échanges entre un noeud demandeur et un noeud destinataire dans un réseau de communication en relation avec la figure 7.

Un tel serveur 300 comprend :
- des moyens de mémorisation 308, notés "KN" sur la figure 7, agencés pour mémoriser des clés secrètes respectivement associées à des noeuds du réseau de communication ;
- un module de réception 302 d'une requête, noté "Rec_S" sur la figure 7, la requête étant envoyée par un noeud demandeur en vue d'un accès à un noeud destinataire ;
- un module de détermination 310 de données pour l'accès à un noeud destinataire, noté "Det_PK" sur la figure 7, agencé pour déterminer une preuve d'authentification destinée au noeud demandeur et une clé de session destinée à être utilisée lors des échanges entre le noeud demandeur et le noeud destinataire ;
- un module d'obtention 306 d'au moins un secret partagé, noté "Det_Kad" sur la figure 7, le secret étant associé à un noeud destinataire et à partager dans un groupe de noeuds comprenant au moins un noeud demandeur, distinct de la clé de session ;
- un module de chiffrement/déchiffrement 312, noté "C/D_S" sur la figure 7, agencé pour chiffrer des données destinées à un noeud en fonction de sa clé secrète respective extraite des moyens de mémorisation 308 ou en fonction d'une clé de session partagée entre un noeud et le serveur et pour déchiffrer des données reçues protégées au moyen de la clé de session ;
- un module d'envoi 304 d'une réponse à la requête, noté "S_S" sur la figure 7, ladite réponse comprenant la preuve d'authentification destinée au noeud destinataire, la clé de session, destinée à être utilisée pour les échanges entre les noeuds demandeur et destinataire, et au moins un secret obtenu.

Dans un mode particulier de réalisation de l'invention, le module de détermination 310 de données pour l'accès à un noeud destinataire met en oeuvre les étapes du protocole Kerberos.

Dans une variante au mode de réalisation décrit, le module d'obtention 306 d'un secret partagé obtient en outre un intervalle de temps de validité associé. Dans ce cas, le module d'envoi 304 transmet également dans la réponse l'intervalle de temps de validité associé.

On va maintenant décrire un noeud d'un réseau de communication en relation avec la figure 8.

Un tel noeud 400 comprend :
- un module d'envoi 402, noté "S_N" sur la figure 8, d'une requête à un serveur en vue d'un accès à un noeud destinataire ;
- un module de réception 404 d'une réponse à la requête, noté "Rec_N" sur la figure 8, la réponse comprenant une preuve d'authentification destinée au noeud destinataire, une clé de session destinée à être utilisée pour les échanges entre le noeud et le noeud destinataire, et au moins un secret partagé ;
- un module de chiffrement/déchiffrement 410, noté "C/D_N" sur la figure 8, agencé pour déchiffrer des données en fonction de sa clé secrète respective ou en fonction d'une clé de session partagée entre le noeud et un serveur et pour chiffrer des données au moyen de la clé de session ;

- un module d'authentification 406, noté "Auth" sur la figure 8, d'au moins un autre noeud au moyen dudit au moins un secret, ledit autre noeud étant apte à joindre le noeud destinataire ;
- un module 408 de détermination de chemins dans un réseau de communication, noté "Det_R" sur la figure 8, agencé pour déterminer un chemin à destination du noeud destinataire privilégiant des noeuds authentifiés.

Dans la variante au mode de réalisation décrit, le module de réception 404 est agencé pour recevoir un intervalle de temps de validité associé à un secret partagé et le module d'authentification 406 est agencé pour déterminer en fonction d'un instant courant un secret partagé valide.

Les modules 302, 304, 306 du serveur de sécurisation sont agencés pour mettre en oeuvre le procédé pour sécuriser des échanges précédemment décrit. Il s'agit de préférence de modules logiciels comprenant des instructions logicielles pour faire exécuter les étapes du procédé de protection précédemment décrit, mises en oeuvre par un serveur du réseau de communication. L'invention concerne donc aussi :
- un programme pour serveur d'un réseau de communication, comprenant des instructions de programme destinées à commander l'exécution des étapes du procédé pour sécuriser des échanges précédemment décrit, lorsque ledit programme est exécuté par un processeur ;
- un support d'enregistrement lisible par un serveur d'un réseau de communication sur lequel est enregistré le programme pour serveur d'un réseau de communication.

Les modules 402, 404, 406 du noeud du réseau de communication sont agencés pour mettre en oeuvre le procédé pour communiquer avec un autre noeud précédemment décrit. Il s'agit de préférence de modules logiciels comprenant des instructions logicielles pour faire exécuter les étapes du procédé pour communiquer précédemment décrit, mises en oeuvre par un noeud du réseau de communication. L'invention concerne donc aussi :
- un programme pour noeud d'un réseau de communication, comprenant des instructions de programme destinées à commander l'exécution des étapes du procédé pour communiquer précédemment décrit, lorsque ledit programme est exécuté par un processeur ;
- un support d'enregistrement lisible par un noeud d'un réseau de communication sur lequel est enregistré le programme pour noeud d'un réseau de communication.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

L'invention concerne également un système de communication dans un réseau de communication, comprenant un serveur pour sécuriser des échanges et une pluralité de noeuds tels que décrits précédemment.

La description a été faite avec un secret partagé associé à un noeud fournisseur d'application N1. Dans une autre variante, il est également possible de partager un tel secret pour l'ensemble du réseau ad-hoc 2 et de l'associer à l'ensemble des noeuds fournisseurs d'application.

La description a été faite dans le cas particulier d'un serveur de sécurisation comprenant les deux entités AS et TGS. Il est également possible de prévoir un serveur par entité.

La description a également été faite dans le cas particulier d'un noeud fournisseur d'application. Il est bien entendu que les procédés selon l'invention s'appliquent à tout noeud destinataire avec lequel un noeud demandeur souhaite communiquer.

L'invention peut également être mise en oeuvre à l'aide d'autres types de mécanismes, dans lesquels un serveur de sécurisation transmet une preuve d'authentification à fournir par un noeud demandeur à un noeud fournisseur d'application.

Les échanges de messages ont été décrits de façon séquentielle. Il est également possible de dissocier dans le temps les échanges des messages M1 (requête en vue d'un accès au noeud fournisseur d'application N1) et M2 (réponse à la requête M1) de ceux des messages M3 (requête M3 de preuve d'authentification) et M4 (réponse à la requête M4).

Dans encore une autre variante, il est également possible, si la première clé de session Ksession a une durée de validité associée, d'envoyer directement la requête M3 de preuve d'authentification.

La description a également été faite dans le cadre d'un réseau ad-hoc. L'application de l'invention ne doit pas être restreinte à ce type de réseau. Elle est également applicable à tout type de réseau de communication, dans lequel un noeud souhaite établir un chemin établi par l'intermédiaire de noeuds de confiance.

## Revendications

1. Procédé pour sécuriser des échanges entre un noeud demandeur (N4) et un noeud destinataire (N1), lesdits noeuds appartenant à un réseau de communication (2),
ledit procédé comprenant les étapes suivantes mises en oeuvre par un serveur de sécurisation (Serv) :
- une étape de réception (F1) d'une requête (M1, M3) envoyée par le noeud demandeur en vue d'un accès au noeud destinataire ;
- une étape d'envoi (F7) d'une réponse (M4) à la requête, ladite réponse comprenant une preuve d'authentification destinée au noeud destinataire et une clé de session,
destinée à être utilisée pour les échanges entre les noeuds demandeur et destinataire, **caractérisé en ce que**, au moins un secret, à partager avec au moins un autre noeud demandeur, distinct de la clé de session, étant associé au noeud destinataire, la réponse envoyée au noeud demandeur contient en outre ledit secret.

2. Procédé selon la revendication 1, dans lequel la réponse contient en outre un intervalle de temps de validité associé audit secret.

3. Procédé pour communiquer entre un noeud demandeur (N4) et un noeud destinataire (N1), lesdits noeuds appartenant à un réseau de communication (2), ledit procédé comprenant les étapes suivantes mises en oeuvre par le noeud demandeur :
- une étape d'envoi (E1) d'une requête (M1) à un serveur de sécurisation en vue d'un accès au noeud destinataire ;
- une étape de réception (E4) d'une réponse (M4) à la requête comprenant une preuve d'authentification destinée au noeud destinataire et une clé de session, destinée à être utilisée pour les échanges entre les noeuds demandeur et destinataire,
**caractérisé en ce que** la réponse comprend en outre au moins un secret et **en ce que** ledit procédé comprend en outre une étape d'authentification d'au moins un autre noeud au moyen dudit au moins un secret, ledit autre noeud étant apte à joindre le noeud destinataire.

4. Procédé selon la revendication 3, dans lequel la réponse comprenant en outre un intervalle de temps de validité associé audit secret, le noeud demandeur sélectionne un secret valide en fonction d'un instant courant.

5. Procédé selon la revendication 3, dans lequel l'étape d'envoi d'une demande d'accès à un noeud destinataire est effectuée suite à une détection d'absence de secret valide.

6. Procédé selon la revendication 3, dans lequel le noeud demandeur et le noeud destinataire communiquent par un chemin constitué de noeuds authentifiés au moyen du secret.

7. Serveur (300) pour sécuriser des échanges entre un noeud demandeur et un noeud destinataire dans un réseau de communication, comprenant :
- des moyens de réception (302) d'une requête envoyée par un noeud demandeur en vue d'un accès à un noeud destinataire ;
- des moyens d'envoi (304) d'une réponse à la requête, ladite réponse comprenant une preuve d'authentification destinée au noeud destinataire et une clé de session, destinée à être utilisée pour les échanges entre les noeuds demandeur et destinataire,
**caractérisé en ce que** les moyens d'envoi sont en outre agencés pour inclure dans la réponse un secret, ledit secret, à partager avec au moins un autre noeud demandeur, distinct de la clé de session, étant associé au noeud destinataire.

8. Noeud (400) d'un réseau de communication, comprenant :
- des moyens d'envoi (402) d'une requête à un serveur en vue d'un accès à un noeud destinataire ;
- des moyens de réception (404) d'une réponse à la requête, la réponse comprenant une preuve d'authentification destinée au noeud destinataire et une clé de session, destinée à être utilisée pour les échanges entre le noeud et le noeud destinataire,
**caractérisé en ce que** les moyens de réception sont en outre agencés pour recevoir une réponse comprenant au moins un secret et **en ce que** ledit noeud comprend en outre des moyens d'authentification (406) d'au moins un autre noeud au moyen dudit au moins un secret, ledit autre noeud étant apte à joindre le noeud destinataire.

9. Système de communication dans un réseau de communication, comprenant un serveur selon la revendication 7 et une pluralité de noeuds selon la revendication 8.

10. Programme d'ordinateur comportant des instructions pour la mise en oeuvre du procédé pour sécuriser des échanges selon la revendication 1 par un serveur d'un réseau de communication, lorsque ce programme est exécuté par un processeur.

11. Programme d'ordinateur comportant des instructions pour la mise en oeuvre du procédé pour communiquer avec un noeud destinataire selon la revendication 3 par un noeud demandeur d'un réseau de communication, lorsque ce programme est exécuté par un processeur.

12. Signal supportant une réponse à une demande d'accès à un noeud destinataire émise par un noeud demandeur, ladite réponse étant émise par un serveur au noeud demandeur et comprenant une preuve d'authentification destinée au noeud destinataire et une clé de session, destinée à être utilisée pour des échanges entre les noeuds demandeur et destinataire, **caractérisé en ce que** ladite réponse comprend en outre au moins un secret ledit secret, à partager avec au moins un autre noeud demandeur, distinct de la clé de session, étant associé au noeud destinataire.

## Claims

1. Method for securing exchange between a requesting node (N4) and a destination node (N1), said nodes belonging to a communication network (2),
said method comprising the following steps implemented by a securing server (Serv):
- a step of receiving (F1) a request (M1, M3) sent by the requesting node with a view to access to the destination node;
- a step of sending (F7) a response (M4) to the request, said response including a proof of authentication intended for the destination node and a session key, intended to be used for the exchanges between the requesting and destination nodes,
**characterized in that**, at least one secret, to be shared with at least one other requesting node,
distinct from the session key, being associated with the destination node, the response sent to the requesting node also contains said secret.

2. Method according to Claim 1, in which the response also contains a validity time interval associated with said secret.

3. Method for communicating between a requesting node (N4) and a destination node (N1), said nodes belonging to a communication network (2), said method comprising the following steps implemented by the requesting node:
- a step of sending (E1) a request (M1) to a securing server with a view to access to the destination node;
- a step of receiving (E4) a response (M4) to the request including a proof of authentication intended for the destination node and a session key, intended to be used for the exchanges between the requesting and destination nodes,
**characterized in that** the response also includes at least one secret and **in that** said method also comprises a step of authentication of at least one other node by means of said at least one secret, said other node being capable of contacting the destination node.

4. Method according to Claim 3, in which, the response also including a validity time interval associated with said secret, the requesting node selects a valid secret according to a current instant.

5. Method according to Claim 3, in which the step of sending an access request to a destination node is performed following a detection of the absence of a valid secret.

6. Method according to Claim 3, in which the requesting node and the destination node communicate via a path consisting of nodes authenticated by means of the secret.

7. Server (300) for securing exchanges between a requesting node and a destination node in a communication network, comprising:
- receiving means (302) for receiving a request sent by a requesting node with a view to access to a destination node;
- sending means (304) for sending a response to the request, said response including a proof of authentication intended for the destination node and a session key, intended to be used for the exchanges between the requesting and destination nodes,
**characterized in that** the sending means are also arranged to include a secret in the response, said secret, to be shared with at least one other requesting node, distinct from the session key, being associated with the destination node.

8. Node (400) of a communication network, comprising:
- sending means (402) for sending a request to a server with a view to access to a destination node;
- reception means (404) for receiving a response to the request, the response including a proof of authentication intended for the destination node and a session key, intended to be used for the exchanges between the node and the destination node,
**characterized in that** the reception means are also arranged to receive a response including at least one secret and **in that** said node also comprises authentication means (406) for authenticating at least one other node by means of said at least one secret, said other node being capable of contacting the destination node.

9. Communication system in a communication network, comprising a server according to Claim 7 and a plurality of nodes according to Claim 8.

10. Computer program comprising instructions for the implementation of the method for securing exchanges according to Claim 1 by a server of a communication network, when this program is run by a processor.

11. Computer program comprising instructions for the implementation of the method for communicating with a destination node according to Claim 3 by a requesting node of a communication network, when this program is run by a processor.

12. Signal supporting a response to an access request requesting access to a destination node sent by a requesting node, said response being sent by a server to the requesting node and including a proof of authentication intended for the destination node and a session key, intended to be used for exchanges between the requesting and destination nodes, **characterized in that** said response also includes at least one secret, said secret, to be shared with at least one other requesting node, distinct from the session key, being associated with the destination node.

## Patentansprüche

1. Verfahren zum Sichern der Austauschvorgänge zwischen einem anfordernden Knoten (N4) und einem Zielknoten (N1), wobei die Knoten zu einem Kommunikationsnetz (2) gehören,
wobei das Verfahren die folgenden Schritte enthält, die von einem Sicherungsserver (Serv) durchgeführt werden:
- einen Empfangsschritt (F1) einer Anforderung (M1, M3), die vom anfordernden Knoten für den Zugriff auf den Zielknoten gesendet wird;
- einen Sendeschritt (F7) einer Antwort (M4) auf die Anforderung, wobei die Antwort einen für den Zielknoten bestimmten Authentifizierungsbeweis und einen Sitzungsschlüssel enthält, der dazu bestimmt ist, für die Austauschvorgänge zwischen dem anfordernden Knoten und dem Zielknoten verwendet zu werden,
**dadurch gekennzeichnet, dass**, da mindestens ein mit mindestens einem anderen anfordernden Knoten zu teilendes Geheimnis, das sich vom Sitzungsschlüssel unterscheidet, dem Zielknoten zugeordnet ist, die an den anfordernden Knoten gesendete Antwort außerdem das Geheimnis enthält.

2. Verfahren nach Anspruch 1, bei dem die Antwort außerdem ein dem Geheimnis zugeordnetes Gültigkeitszeitfenster enthält.

3. Verfahren, um zwischen einem anfordernden Knoten (N4) und einem Zielknoten (N1) zu kommunizieren, wobei die Knoten zu einem Kommunikationsnetz (2) gehören, wobei das Verfahren die folgenden Schritte enthält, die vom anfordernden Knoten durchgeführt werden:
- einen Sendeschritt (E1) einer Anforderung (M1) an einen Sicherungsserver für einen Zugriff auf den Zielknoten;
- einen Empfangsschritt (E4) einer Antwort (M4) auf die Anforderung, die einen für den Zielknoten bestimmten Authentifizierungsbeweis und einen Sitzungsschlüssel enthält, der dazu bestimmt ist, für die Austauschvorgänge zwischen dem anfordernden Knoten und dem Zielknoten verwendet zu werden;
**dadurch gekennzeichnet, dass** die Antwort außerdem mindestens ein Geheimnis enthält, und dass das Verfahren außerdem einen Schritt der Authentifizierung mindestens eines anderen Knotens mittels des mindestens einen Geheimnisses enthält, wobei der andere Knoten sich mit dem Zielknoten verbinden kann.

4. Verfahren nach Anspruch 3, bei dem, da die Antwort außerdem ein dem Geheimnis zugeordnetes Gültigkeitszeitfenster enthält, der anfordernde Knoten ein gültiges Geheimnis abhängig von einem laufenden Zeitpunkt auswählt.

5. Verfahren nach Anspruch 3, bei dem der Sendeschritt einer Zugriffsanforderung auf einen Zielknoten nach einer Erfassung der Abwesenheit eines gültigen Geheimnisses erfolgt.

6. Verfahren nach Anspruch 3, bei dem der anfordernde Knoten und der Zielknoten über einen Weg kommunizieren, der aus mittels des Geheimnisses authentifizierten Knoten besteht.

7. Server (300) zum Sichern von Austauschvorgängen zwischen einem anfordernden Knoten und einem Zielknoten in einem Kommunikationsnetz, der enthält:
- Empfangseinrichtungen (302) einer von einem anfordernden Knoten für einen Zugriff auf einen Zielknoten gesendeten Anforderung;
- Sendeeinrichtungen (304) einer Antwort auf die Anforderung, wobei die Antwort einen für den Zielknoten bestimmten Authentifizierungsbeweis und einen Sitzungsschlüssel enthält, der dazu bestimmt ist, für die Austauschvorgänge zwischen dem anfordernden Knoten und dem Zielknoten verwendet zu werden,
**dadurch gekennzeichnet, dass** die Sendeeinrichtungen außerdem eingerichtet sind, um in die Antwort ein Geheimnis einzufügen, wobei das Geheimnis, das mit mindestens einem anderen anfordernden Knoten zu teilen ist und sich vom Sitzungsschlüssel unterscheidet, dem Zielknoten zugeordnet ist.

8. Knoten (400) eines Kommunikationsnetzes, der enthält:
- Sendeeinrichtungen (402) einer Anforderung an einen Server für den Zugriff auf einen Zielknoten;
- Empfangseinrichtungen (404) einer Antwort auf die Anforderung, wobei die Antwort einen für den Zielknoten bestimmten Authentifizierungsbeweis und einen Sitzungsschlüssel enthält, der dazu bestimmt ist, für die Austauschvorgänge zwischen dem Knoten und dem Zielknoten verwendet zu werden,
**dadurch gekennzeichnet, dass** die Empfangseinrichtungen außerdem eingerichtet sind, um eine mindestens ein Geheimnis enthaltende Antwort zu empfangen, und dass der Knoten außerdem Authentifizierungseinrichtungen (406) mindestens eines anderen Knotens mittels des mindestens einen Geheimnisses enthält, wobei der andere Knoten sich mit dem Zielknoten verbinden kann.

9. Kommunikationssystem in einem Kommunikationsnetz, das einen Server nach Anspruch 7 und eine Vielzahl von Knoten nach Anspruch 8 enthält.

10. Computerprogramm, das Anweisungen zur Durchführung des Verfahrens zum Sichern von Austauschvorgängen nach Anspruch 1 durch einen Server eines Kommunikationsnetzes enthält, wenn dieses Programm von einem Prozessor ausgeführt wird.

11. Computerprogramm, das Anweisungen zur Durchführung des Verfahrens zum Kommunizieren mit einem Zielknoten nach Anspruch 3 durch einen anfordernden Knoten eines Kommunikationsnetzes enthält, wenn dieses Programm von einem Prozessor ausgeführt wird.

12. Signal, das eine Antwort auf eine Zugriffsanforderung auf einen Zielknoten trägt, die von einem anfordernden Knoten gesendet wird, wobei die Antwort von einem Server an den anfordernden Knoten gesendet wird und einen für den Zielknoten bestimmten Authentifizierungsbeweis und einen Sitzungsschlüssel enthält, der dazu bestimmt ist, für Austauschvorgänge zwischen dem anfordernden Knoten und dem Zielknoten verwendet zu werden, **dadurch gekennzeichnet, dass** die Antwort außerdem mindestens ein Geheimnis enthält, wobei das Geheimnis, das mit mindestens einem anderen anfordernden Knoten zu teilen ist und sich vom Sitzungsschlüssel unterscheidet, dem Zielknoten zugeordnet ist.
